Europäisches Patentamt

(19) European Patent Office

Office européen des brevets

(11) Publication number: **0 249 604 B1**

(12) **EUROPEAN PATENT SPECIFICATION**

(45) Date of publication of patent specification :
13.03.91 Bulletin 91/11

(21) Application number : 86906830.4

(22) Date of filing : 17.10.86

(86) International application number :
PCT/FI86/00118

(87) International publication number :
WO 87/02947 21.05.87 Gazette 87/11

(51) Int. Cl.$^5$ : **B60R 25/00**

(54) **METHOD, CONTROL SYSTEM AND EQUIPMENT TO PREVENT THE SEIZURE OF AN ARTICULATED VEHICLE AND/OR A TRAILER TO BE CONNECTED WITH A DRAWING VEHICLE.**

(30) Priority : 12.11.85 FI 854440

(43) Date of publication of application :
23.12.87 Bulletin 87/52

(45) Publication of the grant of the patent :
13.03.91 Bulletin 91/11

(84) Designated Contracting States :
AT BE CH DE FR GB IT LI LU NL SE

(56) References cited :
WO-A-81/03002
DE-A- 1 630 703
DE-A- 2 246 045
DE-A- 3 014 521
DE-A- 3 045 345
DE-A- 3 102 991
GB-A- 2 049 587
GB-A- 2 141 567
US-A- 3 922 897
US-A- 4 258 819
US-A- 4 436 176

(73) Proprietor : TOIKKA, Ensio Antero
Lukkarinkatu 9 C 33
SF-21100 Naantali (FI)
Proprietor : TOIKKA, Arto Ensio
Otakaari 20 B 41
SF-02150 Espoo (FI)

(72) Inventor : TOIKKA, Ensio Antero
Lukkarinkatu 9 C 33
SF-21100 Naantali (FI)
Inventor : TOIKKA, Arto Ensio
Otakaari 20 B 41
SF-02150 Espoo (FI)

(74) Representative : Hallam, Arnold Vincent et al
E.N. LEWIS & TAYLOR 144 New Walk
Leicester LE1 7JA (GB)

## Description

This invention relates to a method of and a control system for preventing the seizure of an articulated vehicle and/or a trailer to be connected with a drawing vehicle.

A drawing vehicle is traditionally actuated by an ignition lock operated by an ignition key or after the current is switched on by a separate start button. Thereafter the hand brake is switched off from its operational position and driving can be commenced.

A disadvantage is connected with the conventional driving preparations, that anybody can drive or tow a trailer illegally with a properly equipped drawing vehicle, and that the combination of the drawing vehicle and the trailer can be seized from the driver by force, and that a vehicle or a vehicle combination in standstill can be captured by passing the ignition lock and starting the motor either from the cabin or the motor space.

When the seizures of vehicles and particularly articulated vehicles have increased, several solutions have previously been proposed to hamper or prevent the seizures.

In the Patent FI-850958 has been disclosed a device to prevent stealing of a vehicle and a trailer connected with it, so that this vehicle combination includes a brake system operated by pressure medium. The device according to the invention has been connected to influence to the before-mentioned brake system, so that it comprises a three-way valve controlled by one code lock and including one inlet opening and two outlets. By the code lock the connection of the inlet opening to each outlet is controlled and thus the pressurization of the brake system or vice versa is made possible.

In the U.S. Patent 4436176 a system to prevent stealing of an articulated vehicle is suggested, in which system couplings are placed in different parts of the vehicle combination, so that these couplings must be gone through in certain order and set to a certain position in order to start the vehicle. The system consequently functions connected with the starting circuit of the vehicle.

In the GB Patent 2141567 a device to prevent seizure of a vehicle has been disclosed. The device consists of a code feeding section, a memory section in which a reference code has been deposited in advance, and a comparison section, in which the reference code is compared with the feeding code. The device has been coupled to the signal horn and starting system of the vehicle, so that the device, when it is activated by a certain code preventing the seizure, switches off the vehicle motor by the timer section in it after a predetermined time and actuates an alarm signal. If the danger factor is passed, the driver can stop the timer by feeding a certain signal in code form to the device.

The DE-patent 3045345 shows a theft-preventing device influencing the fuel feed or the ignition circuit of the vehicle motor. The device functions by code control, so that a signal in a series of numbers has been predeposited in it and compared with the digital signal to be fed to the device. If the fed signal does not correspond the deposited signal, the device breaks off the ignition circuit (gasoline motors) or fuel feed (diesel motors) of the vehicle.

Previously is also known a method to prevent seizure used in the device with a trademark PSI MKII and agent Pekka Särssi International Oy Mikonkatu 21 A 00180 Helsinki Finland. This device is controlled by infra-red beams using a small infra-red transmitter. A disadvantage in the system is its dependence on the driver. Moreover the infra-red transmitter and also the key can be stealed.

A summary can thus be made, that the essential disadvantages of previously known methods and the devices connected with them, as code locks, hand brake gear locks, alarm arrangements, interlock systems of the steering wheel and pull pin locks are especially the following things :

- the drawing vehicle or the whole combination can be captured during the drive,
- it is relatively easy to break the devices,
- by previously known methods it is not possible with sufficient security to prevent illegal towing or real driving of a vehicle combination nor the seizure of it or a half-trailer left by itself.

Connected with the above-mentioned one must still particularly emphasize, that especially trailers left by themselves are nowadays entirely devoid of any seizure-preventing devices and thus quite suitable objects for capture.

The present invention seeks to provide an improved method of and system for preventing seizure of an articulated vehicle.

Accordingly, the present invention provides a method of preventing unauthorised seizure of a trailer of a type adapted to be connected to a drawing vehicle by means of an articulated coupling, in which method the trailer is locked into an undrivable condition, the method being characterised in that, on an attempt to seize the trailer or a combination thereof with the drawing vehicle, immobilisation means cause one or more of the following actions takes place :

a shaft or bogie of the trailer is locked against turning ;

locking means are actuated on the trailer coupling to prevent articulation ;

or the trailer pull pin is held in an inoperative position to prevent coupling.

The present invention further provides a control system for preventing the seizure of a trailer of a type adapted to be connected to a driving vehicle by means of an articulated coupling, the system comprising control means for activating immobilisation means to immobilise the trailer or a combination thereof with a drawing vehicle, characterized in that the control means comprise a first control unit having information input means and a memory section containing previously entered first reference information, and a comparison section ;

a second control unit also including a memory section containing previously entered second reference information, and a comparison section; a two directional data transfer channel between the first and second control units ; and a further data transfer channel ; such that information fed to said input means is compared with said first reference information in said comparison section to produce a resulting code form signal to the second reference information in the comparison section in the second control unit to produce an impulse signal, and said impulse signal is fed through the further data transfer channel to operate the immobilisation means.

In a preferred embodiment of the control system the control commands from the control units are entered by a keyboard, so that right codes mark it possible for a relay unit in the drawing vehicle and/or the trailer to open and close the operational organs of the equipment according to the invention, as solenoids, magnetic valves and transmission gears, which then enable the normal use of the drawing vehicle, trailer and the vehicle combination and in the contrary condition prevent the illegal use, in which case the pull pin of the trailer does not advantageously turn to the towing position or the vehicle combination and/or trailer is locked as unturnable. Moreover it is advantageous that wrong codes lead to alarms.

In the preferred embodiment of the invention a trailer or a vehicle combination can be made as an acting transportation unit only by using right codes and by which driving and/or towing is made impossible, if a code or codes deviating from the preset codes or codes are tried to feed to the control system. Thanks to the two-sectioned control system the driver can now, if needed feed to the system transportation codes of other drawing vehicles or carriers, so that also these can draw a trailer provided with the equipment in compliance with the invention. The trailer can thus be towed only by exactly predetermined vehicles. The theft prevention equipment placed to the trailer can in a simple way be provided also by a key switch making it possible for the ship companies to transfer the trailer to a ship and away from it. Instead of the key switch of course also a code feeding keyboard placed to the trailer can be used. Further on it is advantageous, that a special theft code can easily be deposited to the control system, which code is used if a theft takes place during the transport. The transport code makes normal driving operations possible for a certain time, after which the control system actuates independently theft prevention and alarm functions.

The invention will be described in the following n detail by certain advantageous exemplary adaptations with reference to accompanying drawings, in which

Figure 1 shows schematically a control system according to the invention and the progress of the code information in it,

Figure 2 is a simplified view of the equipment according to the invention, by which the turning trailer shaft can be locked as immobile,

Figure 3 is a more detailed view of the locking mechanism belonging to the equipment of Fig. 4 with necessary pipings and valves,

Figure 4 is a simplified side view of the equipment according to the invention, by which on the one hand a half-trailer can be locked in regard to the drawing vehicle as unturnable, and on the other the turning pull pin of the half-trailer can be set to the position, where drawing of the trailer from it becomes impossible, and

Figure 5 shows the equipment similar to the one of Fig. 4 as a top view. In this figure also the necessary pipings and valves for the operation of the equipment have been shown.

The part 22 of the control system of the seizure prevention equipment according to the invention, placed to the drawing vehicle comprises :
– control unit 23,
– relay unit 24 steered by the control unit 23,
– code feeding keyboard 25 connected with the control unit 23
– alarm unit 36, and also advantageously
– switches 37, 38, 39, which by wrong coupling activate the alarm and, when desired, actuate the functions stopping the vehicle either immediately or after a predetermined time delay and lock the vehicle influencing e.g. the brake, fuel, electric or pressure system. It is advantageous that the switch 37 is connected to the hand brake system 29 and switches 38 and 39 for instance to the locks 32 of the cabin door.

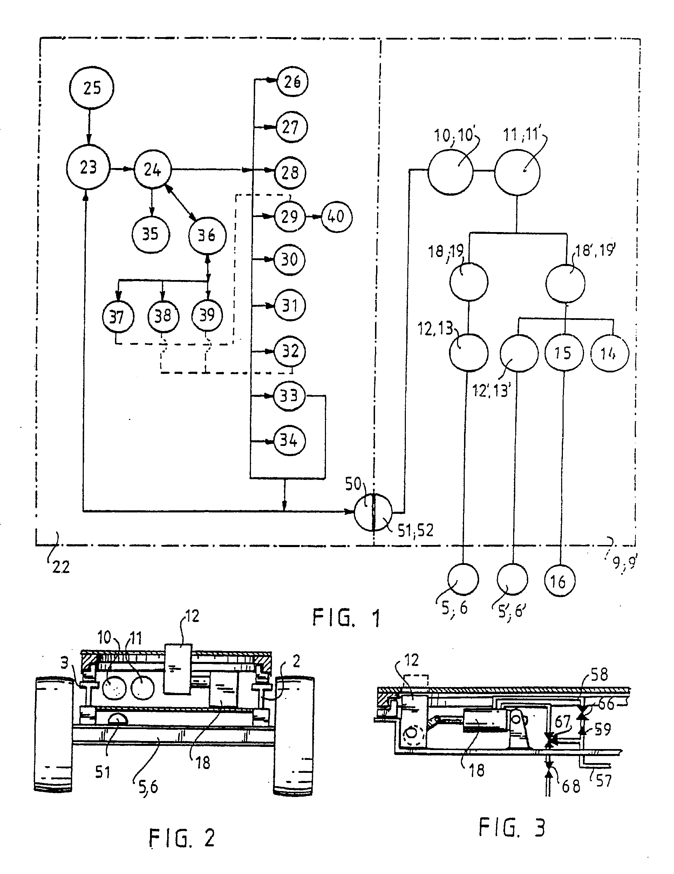

As also shown in Fig. 1 the part 22 of the control system in the drawing vehicle further includes operational organs controlled by the control unit 23 and relay unit 24, advantageously magnetic valves connected to the pressure system 27, brake system 28, hand brake system 29, fuel system 30, compressed air system 33 of the trailer, hydraulic system 34 and locking arrangement 35, by which an illegal access to the motor space of the vehicle can be prevented. By the part 22 of the control system in the drawing vehicle also the function of the electric system 31 and the solenoid 26 of the start motor as well as the locks 32 of the cabin doors can be influenced through the relay unit 24. The half-spherical symbol marked in Fig. 1 by the reference number 50 means the connection to the trailer. This part 22 of the control system placed in the drawing vehicle can advantageously be placed to as inaccessible location as possible, e.g. to the motor space of the vehicle, where it additionally is protected against break-ins by steel plates.

The other half of the control system consists of the part 9, 9' placed to the trailer and including :
  – control unit 10, 10'
  – relay unit 11, 11' steered by the control unit 10, 10' and
  – power device 18, 19, 18', 19' steered by the control unit 10, 10' and the relay unit 11, 11' and locking by the bolt mechanism 12 one turnable shaft 5 or bogie 6 of the trailer. If more than one turnable shaft or bogie is desired to be locked as unturnable by the control system, the control system placed to the trailer will be equipped with corresponding number of additional power devices 18', 19', which drive the corresponding mechanisms 12', 13' in order to lock the desired number of turnable shafts 5' or bogies 6' as unturnable, most advantageously to a slanting position, so that the trailer becomes stiff and unturnable in regard to the drawing vehicle, which effectively prevents driving of the vehicle combination and also more generally drawing of the trailer on a curved road portion.

The part 9, 9' of the control system placed to the trailer can also be provided with the bolt mechanism 14 driven by the power device 18', 19', so that this bolt mechanism is set by the power device 19' to a position, in which it locks the half-trailer to the turntable in such a way, that turning of the half-trailer in regard to the turntable is prevented. Then the trailer becomes stiff and unturnable in regard to the drawing vehicle. Moreover this part 9, 9' of the control system can be equipped with the lifting or turning mechanism 15 of the pull pin 16 driven by the power device 19', so that the pull pin can be set to a position, where the trailer cannot be drawn out of it.

The above-mentioned part 9, 9' of the control system can advantageously be mounted together with other elements possibly connected with it, as the power device 18, 19, 18', 19', bolt mechanism 12, 14 and lifting or turning mechanism 15 of the pull pin 16, to a place shielded against break-ins for example by steel plates. The half-spherical symbol marked in the figure by the reference numbers 51, 52 means the connection to the drawing vehicle.

In the control system according to Fig. 1 on the basis of the code-form information sent by the control unit 23 provided with the keyboard 25 functioning as the feeding means of information, when the reference information in code form has previously been deposited to the control unit 23, it is possible to control the desired number of electrical, hydraulic, pneumatic and/or mechanical operational organs 18, 19, 18', 19'

in the trailer and/or the vehicle combination, so that such an organ influences at least one function, which as prevented makes it impossible either immediately or after a predetermined period to drive the vehicle combination and/or the trailer.

According to the invention the first feeding information in code form, advantageously a series of numbers, is entered to the control unit 23 by the keyboard 25. Then this first feeding information is compared in the comparison section of the control unit 23 with the reference information predeposited to the memory section of the control unit 23. In the above-mentioned comparison section of the control unit 23 a signal is formed by the feeding information and the reference information, and this signal is fed along the first data transfer channel from the control unit 23 to the relay unit 24. Similarly a second code-form information is formed in this comparison section and it is fed along the second two-directional data transfer channel between the control unit 23 of the drawing vehicle and the control unit 10, 10' of the trailer to the control unit 10, 10' of the trailer including the second memory section, into which the second reference information has been deposited. In the comparison section of the trailer control unit 10, 10' the mentioned second reference information and the second code-form information from the control unit 23 are compared with each other. Then an impulse signal is formed, which is fed through at least one (third) data transfer channel to the relay unit 11, 11' to control the desired electrical, hydraulic, pneumatic and/or mechanical operational device 18, 19, 18', 19'. This impulse signal is either a preventing or releasing signal of the desired function depending on the correspondence of the mentioned second reference information and the second code-form information.

It is known, that attempts of seizure are remarkable restrained by the condition, that either the vehicle's own or a separate horn signal system is switched on when the stealing is attempted. Therefore it is advantageous, that an additional data transfer channel leads from the trailer control unit 10, 10' to the horn signal system, so that when a preventing signal is generated, the circuit of the horn signal system is closed and the alarm actuated.

Though from the operational point of view of the invention it is not necessary, the effectivity of the seizure prevention can be increased by using the second codeform signal through the relay unit 24 as a seizurepreventing signal, when the first code-form feeding information fed to the control unit 23 differs from the preselected reference information to activate the pressure system 27, brake system 28, hand brake system 29, fuel system 30, compressed air system of the trailer 33, hydraulic system 34 or locking arrangement of the motor space 35. Besides this second code-form information can be used as a seizure-preventing signal to influence the function of the electric system 31 and the start motor solenoid 26 as well as the cabin door locks 32.

It is also reasonable to emphasize, that the seizures are not directed only to vehicle combinations or trailers left by themselves, but that quite often also situations occur, where especially a vehicle combination is tried to be captured by force from the driver during the drive. For such situations also a second reference information, a so-called protection information, has been deposited to the memory section of the control unit 23 of the control system, so that instead of the first code-form feeding information, i.e. transportation code, a protective code corresponding the protection information deposited to the memory section of the first control unit 23, as mentioned above, can be fed to the control unit 23. Then a temporary release signal of the desired function making the driving of the vehicle combination possible is at first generated in the control unit and then, after a certain delay time, during which the driving of the vehicle combination is possible in a normal way, first a signal activating the stopping function of the vehicle, advantageously breaking of the fuel feed or braking, and thereafter a signal preventing the desired function and activating the power device 18, 19, 18', 19', so that it thus prevents at least one function necessary for the driving of the vehicle combination or generally the drawing of the trailer and advantageously activates also the alarm. In this connection one must ephasize, that from the operational point of view of the invention the use of the function stopping the vehicle is not necessary. This arrangement is, however, advantageous, because the vehicle combination might get damaged, if it should be stiffened as unturnable suddenly under driving.

As already stated above, as a function by which it is possible to effectively prevent the driving of the vehicle combination or more generally the drawing of the trailer, it is advantageous to select at least one of the following :

– the trailer and the drawing vehicle are stiffened as unturnable in regard to each other, whereby an adverse organ of the bolt mechanism 14 to be moved by the power device 19 is pushed to the guiding groove of the pull pin in the drawing table of to the both sides of the drawing table are pushed adverse organs of the bolt mechanism, so that the extended adverse organ is supported to the drawing table and prevents together with the pull pin 16 turning of the trailer in regard to the drawing table,

– at least one turnable shaft of the trailer is locked as unturnable, advantageously to a slanting position, so that the first annular ball ring of the suspension bearing of the shaft or the bogie stationary fixed to the chassis of the trailer and the second annular ball stationary fixed to the shaft 5, 5' or bogie 6, 6', which rings as rotatingly mounted in bearings in regard to each other during the normal drive thus make possible turning of the shaft 5, 5' or bogie 6, 6', are locked by a proper adverse organ of the bolt mechanism 12 driven by the power device 18, 18', 19' as immobile in regard to each other,

– turning pull pin 16 in the trailer, fixed to the rotating shaft 15 driven by the power device 19 is locked to the position, advantageously slantingly in regard to the guiding groove of the drawing table, so that both the coupling of the pull pin 16 to the drawing table and drawing of the trailer from the pull pin 16 are prevented.

As a control unit 23 to be placed to the drawing vehicle and steering the function of the relay unit 24, and which comprises a feeding device 25 for code-form information and necessary memory and comparison sections, a micro computer with the trademark ART-100E can be used. As a control unit 10 or 10' to be placed to the trailer and steering the function of the relay unit 11, 11', and which comprises a feeding device for codeform information and necessary memory and comparison sections, a micro computer with the trademark ART-220E can be used. These devices as well as cables needed in the control system and suitable for data transfer channels are commercially available from the company with the business name ARTSOFT and registered office in Helsinki.

In Figs. 2 and 3 an equipment to be driven by the control system according to the invention, the so-called security locking equipment, has been shown. With this equipment some of the turning shafts 5 or bogies 6 of the trailer ; i.e. whole trailer, or turnable shafts 5' or bogies 6' of the half-trailer can be locked as immobile, most advantageously to a slanting position in regard to the other shafts or bogies of the vehicle combination or the trailer.

The conventionally turning shaft has been suspended to the trailer by two annular ball rings rotating in regard to each other, whereby one ball ring is stationary fixed either directly or, as shown in Figs. 2 and 3, through spacers 2 and 3 to the shaft 5 or bogie 6 and the other ball ring to the chassis structures of the trailer. Due to spacers 2 and 3 a larger space is formed between the lower bottom of the trailer and the shaft or bogie. The equipment according to the invention and the part of the control system on the side of the trailer driving it have been adapted to this space. Moreover the said space is protected against breakins by steel plates placed over and under the said space. As shown in Fig. 2, the power device 18 belonging to the equipment according to the invention is fixed to the steel plate shielding the said space underneath, so that the bolt mechanism 12 driven by the power device penetrates, when the preventive signal is generated, through the opening in the steel plate shielding the said space from above locking thus the ball rings as immobile in regard to each other. In Fig. 2 the connection to the drawing vehicle has also been shown by a half-spherical symbol and the reference number 51.

In Fig. 3 has been presented in further details the power device 18, bolt mechanism 12 and instruments to achieve the desired locking function belonging to the equipment according to a preferable embodiment of the invention as shown in Fig. 2. In the exemplary case of Fig. 3 the power device comprises a pneumatic cylinder 18 fastened at its one shaft end to a lug, which has been, e.g. by welding, fixed to the steel plate protecting the before-mentioned space underneath. The pneumatic cylinder gets the charging pressure from a delivery pipe 58 connected to the filling pipe 57 of the brake circuit of the trailer. The delivery pipe has been provided with a return valve 59 preventing the medium flow in wrong direction, and with a valve 66 steered by the control system according to the invention and which can be e.g. a magnetic valve. In the figure also a discharge pipe of the pneumatic cylinder and the valves 67 and 68 inserted in it have been shown, so that the valve 67 is pressure-operated and receives the control pressure from the filling pipe 57 of the brake circuit and permits the medium flow discharging the cylinder 18 when the pipe 58 is out of pressure. Valve 68 is electrically operated. The piston rod of the pneumatic cylinder 18 is connected in this exemplary case through articulated levers and a cam to the bolt mechanism 12, so that by the cam and the articulated levers the axial movement of the piston rod of the pneumatic cylinder 18 is changed to the up-and-down movement of the adverse organ of the bolt mechanism, whereby during the upward movement of the adverse organ this organ penetrates to the steel plate protecting the above-mentioned space from above through the opening made close to the outer edge of the mentioned ball ring locking thus the shaft 5 or the bogie 6 as unturnable.

In this connection it is reasonable to emphasize, that the use of the adverse organ of the bolt mechanism 12 moving in the up-and-down direction to achieve the desired locking result is not necessarily the only possible adaptation form. Thus the piston rod of the power device can be provided for instance with suitable projections or serrations corresponding the design of the inner surfaces of the annular ball rings opening to the said space or the perforation made in them.

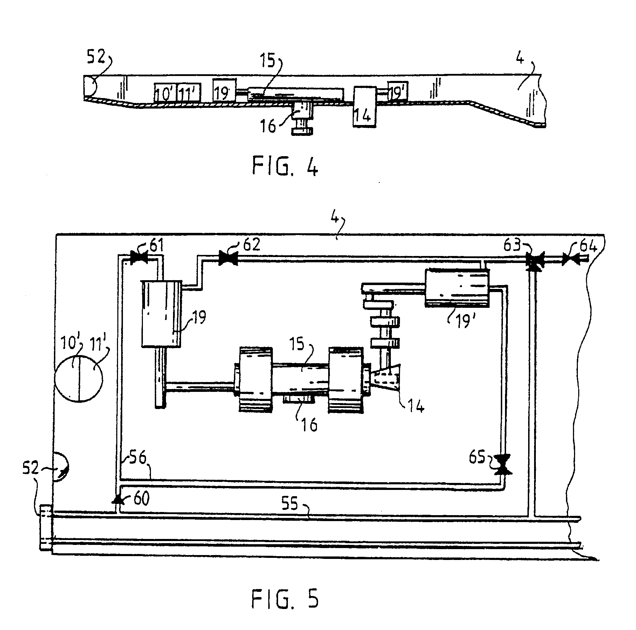

In Figs. 4 and 5 has been shown another advantageous adaptation form for making a trailer and/or a vehicle combination unfit for driving or towing. In this embodiment the goal is achieved by locking a trailer, i.e. half-trailer, connected to a drawing vehicle as unturnable in regard to the drawing table and in case of a half-trailer left by itself by turning the pull pin 16 of the trailer to a slanting position in regard to the guiding groove in the drawing table.

As shown in Fig. 4, the seizure-preventing equipment according to an advantageous embodiment of the invention, i.e. security locking equipment of a halftrailer placed under the chassis structures of a halftrailer and closed into a casing 4 of steel plate ; has a pull pin 16 stationary fixed to the rotating shaft 15 driven by the reciprocating piston rod of the first power device 19 and thus turning with the rotating shaft 15, and the bolt mechanism 14 driven by the second power device 19′ and by a crankshaft and a cam member connected with the reciprocating piston rod of the said power device, this bolt mechanism 14 including selectively either one protruding adverse organ fitting to the guiding groove of the drawing table, asshown in the figure, or at least two protruding adverse organs fitting around the inner perimeter of the drawing table, whereby each of the adverse organs have advantageously been equipped with the before-mentioned cam member to change the rotating movement of the crankshaft to the vertical up and down movement of the adverse organ. The preferably place for the bolt mechanism 14 is immediately behind the pull pin 16.

Fig. 5 shows in further details the power devices 19, 19′, bolt mechanism 14 and instruments to obtain the desired locking result belonging to the equipment according to the advantageous embodiment of the invention as shown in Fig. 4. In this exemplary case the power devices are pneumatic cylinders 19, 19′ connected at their one shaft end to a lug, which has been made e.g. by welding to the protective casing 4 of the equipment. Pneumatic cylinders 19 and 19′ get the charging pressure from the delivery piping 56 connected to the filling pipe 55 of the trailer brake circuit and equipped with a return valve 60 preventing the medium flow in wrong direction. To pressurize the pneumatic cylinder 19, by which the pull pin 16 is driven, the delivery piping 56 comprises a valve, for instance a magnetic valve, steered by the control system 10′, 11′ according to the invention. To pressurize the pneumatic cylinder 19′, by which the bolt mechanism 14 is driven, the delivery piping 56 also comprises a valve 65, for example a magnetic valve, steered by the control system 10′, 11′ according to the invention. The figure includes also the discharge piping of pneumatic cylinders 19 and 19′ and to it placed discharge valves 62, 63 and 64, of which the valves 62 and 64 are electrically operated and the valve 63 pressure-operated receiving the control pressure from the filling pipe 55. The valve 63 passes the medium flow emptying the cylinder 19, 19′, when no pressure exists in the pipe 55.

The invention has been described above only by some of its advantageous exemplary embodiments. This does not, of course, restrict the invention, but several combinations and modifications are possible within the scope of the appended claims. Particularly one must emphasize, that the invention is not necessarily connected with trucks and trailers, but that it can be also adapted to other vehicles, as buses and earthmovers. The security of the equipment according to the invention can still be increased by depositing for instance to the memory section of the control unit of the drawing vehicle a special service code, by which the condition of the locks in the motor space is controlled. Then the access to the motor space, into which the control unit 23 of the drawing vehicle can most advantageously be placed, becomes possible only by the right code.

## Claims

1. A method of preventing unauthorised seizure of a trailer of a type adapted to be connected to a drawing vehicle by means of an articulated coupling, in which method the trailer is locked into an undrivable condition, the method being characterised in that, on an attempt to seize the trailer or a combination thereof with the drawing vehicle, immobilisation means cause one or more of the following actions takes place :

a shaft (5, 5') or bogie (6, 6') of the trailer is locked (12) against turning ;

locking means (14) are actuated on the trailer coupling to prevent articulation ;

or the trailer pull pin (16) is held in an inoperative position to prevent coupling.

2. A method as claimed in Claim 1 in which a control unit (23) is provided in the drawing vehicle having an information input means (25) said control unit containing previously-entered reference information, characterised in that said information input means (25) feeds code form information to the control unit (23), said code form information is compared with said previously entered reference information and second code form information produced by said comparison is fed to at least one other control unit (10, 10') containing second previously entered reference information, and an impulse signal dependent on the correspondence of said second code form information and said second previously entered reference information is generated to operate or release said immobilisation means.

3. A method according to Claim 2 further characterised in that said impulse signal also activates an alarm function.

4. A method according to Claim 2 or Claim 3 further characterised in that protection code information can be fed to the control unit (23) whereby said impulse signal is provided to operate said immobilisation means to prevent normal driving.

5. A control system for carrying out the method described in Claim 1, preventing the seizure of a trailer of a type adapted to be connected to a driving vehicle by means of an articulated coupling, the system comprising control means for activating immobilisation means to immobilise the trailer or a combination thereof with a drawing vehicle, characterized in that the control means comprise

a first control unit (23) having information input means (25) and a memory section containing previously entered first reference information, and a comparison section ;

a second control unit (10,10') also including a memory section containing previously entered second reference information, and

a comparison section ;

a two directional data transfer channel between the first and second control units (23, 10) ;

and a further data transfer channel ;

such that information fed to said input means is compared with said first reference information in said comparison section to produce a resulting code form signal to the second reference information in the comparison section in the second control unit to produce an impulse signal, and said impulse signal is fed through the further data transfer channel to operate the immobilisation means.

6. A control system according to Claim 5 further characterised in that said impulse signal also cause activation of an alarm.

7. A control system according to Claim 5 or Claim 6 further characterised in that third and fourth reference information is previously deposited in the memory sections of said first and second control units (23, 10) respectively, so that a further input signal fed to the first control unit (23) and compared with the third reference information generates a resulting first protection signal, the first protection signal is fed to the second control unit (10) and compared to fourth reference information to generate a protection impulse signal adapted to either prevent or release the immobilisation means for a predetermined delay time.

8. A control system as claimed in any of Claims 5 to 7 immobilisation means characterised in that the immobilisation means comprise a bolt mechanism (12, 13, 14) adapted to lock a shaft or bogie of the trailer, a power cylinder (18, 19) of the bolt mechanism (12, 13, 14) and relay means operated by said other control unit (10) and actuating the power cylinder, the power cylinder (18, 19) being connected through a flow pipe (58) and valve (66) to the vehicle pressure system on the infeed side thereof.

9. A control system according to claim 8 further characterised in that the immobilisation means comprise a further power cylinder (19') adapted to move the pull pin (16) via a power transmission (15) between a drawing position and a security position in which coupling of the trailer of the vehicle is prevented.

10. A control system according to Claim 8 for a full trailer further characterised in that the bolt mechanism (12) comprises means to lock a suspension bearing of the trailer shaft or bogie.

11. A control system according to Claim 8 for a semi trailer, further characterised in that the bolt mechanism (14) comprises means to lock a fifth wheel assembly to prevent articulation of the trailer relative to the drawing vehicle.

12. A control system according to Claim 8 for a semi trailer, further characterised in that the power transmission member comprises a shaft (15) coupled to the power cylinder (19) and rigidly secured to the pull pin (16) such that the pull pin (16) rotates with the shaft (15).

## Ansprüche

1. Verfahren zum Verhindern einer unbefugten Bemächtigung eines derart ausgebildeten Anhängers, daß er mit Hilfe einer Gelenkkupplung mit einem Zugfahrzeug verbunden werden kann, bei welchem der Anhänger in einen nicht fahrbaren Zustand verriegelt wird, wobei das Verfahren dadurch gekennzeichnet ist, daß bei einem Versuch der Bemächtigung des Anhängers oder des Anhängers zusammen mit dem Zugfahrzeug eine Feststelleinrichtung das Stattfinden eines oder mehrerer der folgenden Vorgänge verursacht:
Eine Welle (5, 5') bzw. ein Achsaggregat (6, 6') des Anhängers wird durch Verriegelung (12) drehunfähig gemacht;
eine Verriegelungseinrichtung (14) wird an der Anhängerkupplung zur Verhänderung der Gelenkverbindung betätigt;
oder der Anhängerzugzapfen (16) wird zur Verhinderung der Kupplung in einer betriebsunfähigen Stellung gehalten.

2. Verfahren nach Anspruch 1, bei welchem eine eine Dateneingabeeinrichtung (25) aufweisende Steuereinheit (23) im Zugfahrzeug vorgesehen ist, wobei die Steuereinheit vorher eingegebene Vergleichsdaten enthält, dadurch gekennzeichnet, daß die Dateneingabeeinrichtung (25) der Steuereinheit (23) codierte Daten zuführt, die codierten Daten mit den vorher eingegebenen Vergleichsdaten verglichen und aus dem Vergleich resultierende zweite codierte Daten mindestens einer weiteren, zweite vorher eingegebene Vergleichsdaten enthaltende Steuereinheit (10, 10') zugeführt werden, und daß ein von der Entsprechung der zweiten codierten Daten und der zweiten vorher eingegebenen Vergleichsdaten abhängiges Pulssignal zum Betreiben bzw. Lösen der Feststelleinrichtung erzeugt wird.

3. Verfahren nach Anspruch 2, ferner dadurch gekennzeichnet, daß das Pulssignal auch eine Alarmfunktion betätigt.

4. Verfahren nach Anspruch 2 oder Anspruch 3, ferner dadurch gekennzeichnet, daß codierte Schutzdaten in die Steuereinheit (23) eingegeben werden können, wodurch das Pulssignal zum Betreiben der Feststelleinrichtung zur Verhinderung eines normalen Fahrbetriebs gegeben wird.

5. Steuersystem zum Ausführen des in Anspruch 1 beschriebenen Verfahrens, welches die Bemächtigung eines Anhängers verhindert, der so ausgebildet ist, daß er mit Hilfe einer Gelenkkupplung mit einem Zugfahrzeug verbunden werden kann, wobei das System eine Steuereinrichtung zur Betätigung einer Feststelleinrichtung zum Feststellen des Anhängers bzw. des Anhängers zusammen mit dem Zugfahrzeug umfaßt, dadurch gekennzeichnet, daß die Steuereinrichtung folgendes umfaßt:
Eine erste Steuereinheit (23) mit einer Dateneingabeeinrichtung (25) und einen vorher eingegebene erste Vergleichsdaten enthaltenden Speicherabschnitt, und einen Vergleichsabschnitt;
eine zweite Steuereinheit (10, 10'), die ebenfalls einen vorher eingegebene zweite Vergleichsdaten enthaltenden Speicherabschnitt und einen Vergleichsabschnitt umfaßt;
einen in zwei Richtungen arbeitenden Datenübertragungskanal zwischen der ersten und der zweiten Steuereinheit (23, 10); und einen weiteren Datenübertragungskanal;
sodaß in die Eingabeeinrichtung eingegebene Daten im Vergleichsabschnitt zur Erzeugung eines resultierenden codierten Signals mit den ersten Vergleichsdaten verglichen werden, das codierte Signal zur Erzeugung eines Pulssignals an die zweiten Vergleichsdaten im Vergleichsabschnitt der zweiten Steuereinheit weitergegeben wird, und das Pulssignal durch den weiteren Datenübertragungskanal zur Betätigung der Feststelleinrichtung eingegeben wird.

6. Steuersystem nach Anspruch 5, ferner dadurch gekennzeichnet, daß das Pulssignal auch die Auslösung einer Alarmvorrichtung verursacht.

7. Steuersystem nach Anspruch 5 oder Anspruch 6, ferner dadurch gekennzeichnet, daß dritte und vierte Vergleichsdaten vorher in die Speicherabschnitte der ersten bzw. zweiten Steuereinheiten (23, 10) eingegeben werden, so daß ein weiteres, in die erste Steuereinheit (23) eingegebenes und mit den dritten Vergleichsdaten verglichenes Eingabesignal ein resultierendes erstes Schutzsignal erzeugt, und daß das erste Schutzsignal in die zweite Steuereinheit (10) eingegeben und zur Erzeugung eines Schutzpulssignals, das die Feststelleinrichtung für eine vorbestimmte Dauer entweder verhindern oder auslösen kann, mit den vierten Vergleichsdaten verglichen wird.

8. Steuersystem nach einem der Ansprüche 5 bis 7, dadurch gekennzeichnet, daß die Feststelleinrichtung einen Riegelmechanismus (12, 13, 14), der eine Welle bzw. ein Achsaggregat des Anhängers verriegeln kann, einen Kraftzylinder (18, 19) des Riegelmechanismus (12, 13, 14) und eine von der anderen Steuereinheit (10) betriebene und den Kraftzylinder betätigende Relaiseinrichtung umfaßt, wobei der Kraftzylinder (18, 19) über ein Strömungsrohr (58) und ein Ventil (66) mit dem Drucksystem des Fahrzeugs auf dessen Eingabeseite verbunden ist.

9. Steuersystem nach Anspruch 8, ferner dadurch gekennzeichnet, daß die Feststelleinrichtung einen weiteren Kraftzylinder (19') umfaßt, der über eine Kraftübertragung (15) zwischen einer Zug und einer Sicherheitsstellung, welche das Kuppeln des Fahrzeuganhängers verhindert, den Zugzapfen (16) bewegen kann.

10. Steuersystem nach Anspruch 8 für einen selbständigen Anhänger, ferner dadurch gekennzeichnet, daß der Riegelmechanismus (12) eine Einrichtung zum Verriegeln eines Aufhängungslagers der Welle bzw. des Achsaggregats des Anhängers umfaßt.

11. Steuersystem nach Anspruch 8 für einen Sattelanhänger, ferner dadurch gekennzeichnet, daß der Riegelmechanismus (14) eine Einrichtung zum Verriegeln einer Drehschemelanordnung umfaßt, um eine gelenkige Verbindung des Anhängers mit dem Zugfahrzeug zu verhindern.

12. Steuersystem nach Anspruch 8 für einen Sattelanhänger, ferner dadurch gekennzeichnet, daß das Kraftübertragungsglied eine derart mit dem Kraftzylinder (19) gekoppelte und starr mit dem Zugzapfen (16) verbundene Welle (15) umfaßt, daß der Zugzapfen (16) mit der Welle (15) umläuft.

**Revendications**

1. Méthode pour prévenir la saisie non-autorisée d'une remorque d'un type adapté pour être relié à un véhicule tracteur au moyen d'un couplage articulé, dans laquelle la remorque est bloquée dans un état inconduisible, la méthode étant caractérisée en ce que, lors d'une tentative de saisie de la remorque ou d'une combinaison de celle-ci et du véhicule tracteur, des moyens d'immobilisation provoquent l'une ou plu- sieurs des actions suivantes :
une arbre (5, 5') ou bogie (6, 6') de la remorque est bloqué (12) pour ne pas tourner ;
des moyens de blocage (14) sont actionnés sur le couplage de la remorque pour prévenir l'articulation ;
ou la cheville de connection (16) de la remorque est maintenue en position inactive afin de prévenir le couplage.

2. Méthode selon la revendication 1, dans laquelle une unité de commande (23) est prévue dans le véhicule tracteur, présentant un moyen (25) d'entrée d'informations, ladite unité de commande contenant des informations de référence enregistrées précédemment, caractérisée en ce que ledit moyen (25) d'entrée d'informations fait entrer des informations sous forme de code dans l'unité de commande (23), lesdites informations sous forme de code sont comparées auxdites informations sous forme de code entrées précédemment et des secondes informations sous forme de code produites par ladite comparaison sont entrées dans au moins une autre unité de commande (10, 10') contenant des secondes informations de référence entrées précédemment, et un signal à impulsion dépendant de la conformité desdites secondes informations sous forme de code et lesdites secondes informations de référence entrées précédemment est produit afin d'opérer ou de libérer lesdits moyens d'immobilisation.

3. Méthode selon la revendication 2, caractérisée en outre en ce que le signal à impulsion actionne également une fonction d'alarme

4. Méthode selon la revendication 2 ou la revendication 3, caractérisée en outre en ce que des informations sous forme code de protection peuvent être passées à l'unité de commande (23) grâce à quoi ledit signal à impulsion est prévu pour opérer lesdits moyens d'immobilisation afin de prévenir la conduite normale.

5. Système de commande pour mettre en oeuvre la méthode décrite à la revendication 1, destiné à prévenir la saisie d'une remorque d'un type adapté pour être relié à un véhicule tracteur au moyen d'un couplage articulé, le système comprenant des moyens de commande pour actionner les moyens d'immobilisation afin d'immobiliser la remorque ou une combinaison de celle-ci et d'un véhicule tracteur, caractérisé en ce que les moyens de commande comprennent
une première unité de commande (23) présentant des moyens (25) d'entrée d'informations et une section à mémoire contenant des premières informations de référence entrées précédemment, et une section de comparaison ;
une seconde unité de commande (10, 10') comprenant également une section à mémoire contenant des secondes informations de référence entrées précédemment, et une section de comparaison ; un canal de transfert de données bi-directionnel entre les première et seconde unités de commande (23, 10) ;
et un autre canal de transfert de données ; système tel que des informations passées auxdits moyens d'entrée sont comparées aux premières informations de référence dans ladite section de comparaison afin de produire un signal résultant sous forme de code passé aux secondes informations de référence dans la section de comparaison dans la seconde unité de commande pour produire un signal à impulsion, et ledit signal à impulsion est passé à travers l'autre canal de transfert de données afin d'opérer les moyens d'immobilisation.

6. Système de commande selon la revendication 5, caractérisé en outre en ce que le signal à impulsion provoque également l'activation d'une alarme.

7. Système de commande selon la revendication 5 ou la revendication 6, caractérisé en outre en ce que les troisième et quatrième informations de référence sont déposées auparavant dans les sections à mémoire desdites première et seconde unités de commande (23, 10) respectivement, de manière qu'un autre signal d'entrée passé à la première unité de commande (23) et comparé aux troisièmes informations de référence produit un premier signal de protection résultant, le premier signal de protection est passé à la seconde unité de commande (10) et comparé aux quatrièmes informations de référence pour produire un signal à impulsion de protection adapté soit pour empêcher soit pour libérer les moyens d'immobilisation pendant un temps de délai déterminé.

8. Système de commande selon l'une quelconque des revendications 5 à 7, caractérisé en ce que les moyens d'immobilisation comprennent un mécanisme de blocage (12, 13, 14) adapté pour bloquer un arbre ou bogie de la remorque, un cylindre (18, 19) alimenté en énergie du mécanisme de blocage (12, 13, 14) et des moyens de relai opérés par ladite autre unité de commande (10) et actionnant le cylindre alimenté en énergie, le cylindre alimenté en énergie (18, 19) étant relié à travers un tube de déchargement (58) et une soupape (66) au système de pression du véhicule sur le côté d'entrée de celui-ci.

9. Système de commande selon la revendication 8, caractérisé en outre en ce que les moyens d'immobilisation comprennent un autre cylindre alimenté en énergie (19') adapté pour déplacer la cheville de connection (16) via une transmission d'énergie (15) entre une position de traction et une position de sécurité dans laquelle le couplage de la remorque du véhicule est prévenu.

10. Système de commande selon la revendication 8, pour une remorque pleine, caractérisé en outre en ce que le mécanisme de blocage (12) comprend des moyens pour bloquer un palier de suspension de l'arbre ou bogie de la remorque.

11. Système de commande selon la revendication 8, pour une semi-remorque, caractérisé en outre en ce que le mécanisme de blocage (14) comprend des moyens pour bloquer un ensemble à sellette d'accouplement pour prévenir l'articulation de la remorque par rapport au véhicule tracteur.

12. Système de commande selon la revendication 8, pour une semi-remorque, caractérisé en outre en ce que le membre de transmission d'énergie comprend un arbre (15) accouplé au cylindre alimenté en énergie (19) et fixé de manière rigide à la cheville de connection (16) de manière telle que la cheville de connection (16) tourne avec l'arbre (15).

FIG. 1

FIG. 2

FIG. 3

FIG. 4

FIG. 5